(19) Europäisches Patentamt

European Patent Office

Office européen des brevets

(11) EP 0 761 574 A2

## (12) DEMANDE DE BREVET EUROPEEN

(43) Date de publication:
   12.03.1997 Bulletin 1997/11

(51) Int Cl.6: **B65G 47/66**, B65G 27/16,
   B66B 29/08

(21) Numéro de dépôt: 96401868.3

(22) Date de dépôt: 30.08.1996

(84) Etats contractants désignés:
   AT DE ES FR GB IT NL

(30) Priorité: 08.09.1995 FR 9510564

(71) Demandeurs:
   • Patin, Pierre
      F-75005 Paris (FR)
   • S.A. 2P
      94270 le Kremlin Bicetre (FR)

(72) Inventeur: **Patin, Pierre**
   **75005 Paris (FR)**

(74) Mandataire: **Phélip, Bruno et al**
   **c/o Cabinet Harlé & Phélip**
   **21, rue de La Rochefoucauld**
   **75009 Paris (FR)**

### (54) Dispositif de transfert entre deux éléments de transport

(57)   L'invention a pour objet un dispositif de transfert entre deux éléments de transport, à bandes ou rouleaux notamment pour piétons et couvre également les transporteurs ainsi réalisés.

Selon l'invention, les surfaces d'appui desdits éléments de transport sont sensiblement au même niveau et le dispositif de transfert comporte entre deux éléments de transport successifs (2,1), un élément de transfert (T,6) présentant une surface d'appui (50) de l'objet transporté, placée sensiblement dans le prolongement commun des surfaces d'appui desdits premier (2) et deuxième (1) éléments de transport, et animée d'un mouvement susceptible de déterminer le déplacement de l'objet transporté, pratiquement sans frottement, du premier élément (2) au deuxième élément (1), ou inversement.

Fig. 2

## Description

L'invention concerne un dispositif de transfert entre deux éléments de transport, notamment pour piétons, marchandises ou analogues, et couvre également les transporteurs comportant un tel dispositif.

On entend ici et dans la suite du présent texte, par "transporteur" tout appareil à rouleaux ou à bande utilisé notamment pour déplacer des personnes ou leurs bagages ou objets analogues, sur une surface d'appui, par exemple, une bande transporteuse continue d'une longueur quelconque se déplaçant à une certaine vitesse suivant une direction longitudinale. La bande peut être réalisée en matière déformable ou par enchaînement d'éléments présentant une face au moins approximativement plane.

De tels transporteurs sont de plus en plus utilisés pour le déplacement rapide des personnes, par exemple, dans les aérogares ou dans les réseaux souterrains de transport en commun. Cependant, si la vitesse du transporteur est constante, celle-ci doit, nécessairement, être limitée pour permettre l'accès au transporteur et sa sortie à toutes les personnes. Il en résulte que la vitesse du transporteur doit être assez réduite et, généralement, inférieure à celle de la marche normale.

C'est pourquoi on a proposé d'utiliser des transporteurs à vitesse variable permettant, au moins sur une longueur importante, d'augmenter sensiblement la vitesse de transport. Dans ce cas, il faut disposer, à l'entrée du transporteur, d'un élément intermédiaire accélérateur qui permet de passer progressivement de la vitesse de marche normale à la vitesse plus élevée du transporteur principal. De même, à la sortie de celui-ci, un élément décélérateur permet de revenir progressivement à la vitesse normale.

Le document FR-A-2.675.135, par exemple, décrit un dispositif de transport, notamment un transporteur à vitesse élevée comportant, monté sur un support, un transporteur principal destiné à entraîner les personnes, marchandises ou analogues à vitesse élevée par rapport audit support, un ensemble accélérateur sur lequel le chargement dudit transporteur principal est assuré et un ensemble décélérateur sur lequel les personnes ou leurs bagages ou analogues sont déposées pour revenir à faible vitesse.

Pour assurer le passage des personnes, marchandises en pièces ou objets analogues sur le transporteur principal sans risque de les déséquilibrer ou les endommager lors de leur transition entre l'ensemble accélérateur et le transporteur, l'extrémité aval, dans le sens de déplacement, de l'ensemble accélérateur est légèrement surélevée par rapport à l'extrémité amont du transporteur principal et inversement l'extrémité aval du transporteur principal est légèrement surélevée par rapport à l'extrémité amont de l'ensemble décélérateur.

De la sorte, grâce à la vitesse initiale donnée par la partie amont, la personne ou l'objet transporté décrit, en quittant l'élément amont, une courte trajectoire passant au dessus de l'intervalle entre les deux éléments pour retomber sur l'extrémité amont de l'élément suivant. Bien entendu, la zone de jonction entre les deux éléments est équipée, de préférence, d'un dispositif à peigne muni, par exemple, de dents qui pénètrent dans des nervures longitudinales ménagées sur la bande du transporteur principal.

De cette façon, la personne ou l'objet transporté n'entre en contact avec aucun élément fixe pendant le franchissement de l'intervalle et n'est donc soumis à aucun frottement susceptible de réduire brutalement sa vitesse de déplacement.

Cependant, il existe nécessairement, entre le transporteur principal et les zones de chargement et de déchargement, une dénivellation qui doit être définie en fonction de la distance à franchir et des vitesses du transporteur principal et des zones adjacentes.

De ce fait, un tel système ne fonctionne que dans un sens de déplacement. Or, il est apparu qu'il serait extrêmement utile de disposer d'un système réversible, notamment dans les cas assez fréquents où la direction de transport est fonction d'un besoin en capacité de transport, variable par exemple, selon les heures de pointe lorsqu'il s'agit d'une installation dans une gare ou selon l'horaire d'un moyen de transport lorsqu'il s'agit d'un centre de triage.

Le but de l'invention est de pallier ces inconvénients et, plus particulièrement, de proposer un système de transport pouvant fonctionner à vitesse élevée et dont le sens de déplacement peut être inversé, les différents éléments étant réversibles.

L'invention concerne donc, d'une façon générale, un transporteur, notamment pour piétons, bagages ou objets analogues, comportant au moins deux éléments de transport montés sur un support fixe, respectivement un premier élément et au moins un deuxième élément, disposés l'un à la suite de l'autre et un dispositif de transfert entre lesdits éléments, ces derniers comprenant chacun une surface d'appui sensiblement plane pour l'objet transporté et des moyens de déplacement dudit objet reposant sur la surface d'appui suivant une direction longitudinale de transfert.

Conformément à l'invention, les surfaces d'appui des deux éléments de transport sont sensiblement au même niveau et le dispositif de transfert comporte, entre lesdits premier et deuxième éléments de transport, un élément de transfert présentant une surface d'appui de l'objet transporté placée sensiblement dans le prolongement commun des surfaces d'appui desdits premier et deuxième éléments de transport, ledit élément de transfert étant associé à des moyens de mise en mouvement de la dite surface d'appui, susceptibles de déterminer le déplacement de l'objet transporté, pratiquement sans frottement, du premier élément au deuxième élément, ou inversement.

Dans un premier mode de réalisation, cet élément de transfert comprend une plateforme sensiblement horizontale sur laquelle est ménagée ladite surface d'appui et des moyens de guidage vertical de ladite plateforme, l'ensemble étant associé à un générateur de mouvements alternatifs verticaux à grande fréquence et faible amplitude.

Dans un deuxième mode de réalisation, l'élément de transfert comprend une plateforme sensiblement horizontale sur laquelle est ménagée ladite surface d'appui et des moyens de guidage de ladite plateforme, l'ensemble étant associé à un générateur de mouvements louvoyants, les mouvements louvoyants ayant une amplitude approximativement horizontale et une amplitude approximativement verticale très inférieure à l'amplitude horizontale.

De plus l'élément de transfert et au moins une partie des moyens de mise en mouvement ont un encombrement limité de façon à se placer dans l'espace entre les extrémités en regard des deux éléments de transport, compte-tenu de la forme de celles-ci, la largeur de la plateforme étant juste suffisante pour assurer la continuité des surfaces d'appui.

D'autres caractéristiques particulièrement avantageuses font l'objet des sous-revendications.

Grâce à ces dispositions, les personnes ou marchandises transportées décrivent, lors de la transition d'une zone à l'autre, une série de petits déplacements de longueur réduite et de faible hauteur de chute qui permettent de passer progressivement d'un élément de transport au suivant.

En particulier, il est possible de la sorte, d'assurer le passage d'un élément accélérateur à un transporteur principal et de la sortie de celui-ci à un élément décélérateur, sans ménager de dénivellation entre les éléments successifs et il en résulte que le système est réversible, le déplacement pouvant s'effectuer dans un sens ou un autre.

Mais l'invention, ne s'applique pas exclusivement à un système de transport à vitesse variable, d'autres utilisations étant possibles.

Par exemple, l'invention permet de réaliser une bifurcation entre un premier élément de transport et respectivement, un deuxième et un troisième élément de transport couvrant chacun une partie de la largeur du premier élément, au moins un dispositif de transfert selon l'invention étant disposé entre les extrémités en regard desdits éléments, ledit élément de transfert ayant un premier côté transversal de jonction avec l'extrémité du premier transporteur et un second côté transversal de jonction avec les extrémités du deuxième et/ou du troisième élément.

Par ailleurs, l'invention permet également d'assurer un changement de direction entre deux éléments de transport dont les axes longitudinaux font entre eux un angle aigu, la surface d'appui de l'élément de transfert ayant alors une forme trapézoïdale comportant deux côtés transversaux faisant entre eux le même angle entre les axes longitudinaux pour le raccordement, respectivement, avec les extrémités correspondantes, respectivement, du premier et du deuxième élément de transport.

Il est possible également d'associer une pluralité d'éléments de transfert selon l'invention entre lesquels sont disposés des éléments intermédiaires de transport de faible largeur, au moins certains desdits éléments de transfert ou des éléments intermédiaires présentant une surface d'appui trapézoïdale de façon à déterminer un changement progressif d'orientation de la direction générale de déplacement.

D'autres caractéristiques et avantages de l'invention ressortiront de la description suivante de certains modes de réalisation en référence aux dessins, dans lesquels :

La Figure 1 représente schématiquement l'ensemble d'un transporteur à bande selon l'invention.

La Figure 2 représente la vue en bout d'un dispositif de transfert selon l'invention, réalisé par un premier système mécanique classique à bielles et excentriques.

La Figure 3 représente la vue en bout d'un dispositif analogue, mais qui ne comporte pas de bielle.

La Figure 4 est une coupe longitudinale de la Figure 3.

La Figure 5 représente la vue en bout d'un dispositif de transfert selon l'invention, réalisé par un deuxième système mécanique à bielles et excentriques.

La Figure 6 est un diagramme représentant le mouvement d'un point d'un objet transporté sur le dispositif de transfert selon l'invention.

La Figure 7 représente un module de transporteur trapézoïdal permettant de réaliser un changement de direction.

La Figure 8 représente la disposition que l'on peut donner à un ensemble de modules du type représenté sur la Figure 6 pour réaliser une bifurcation.

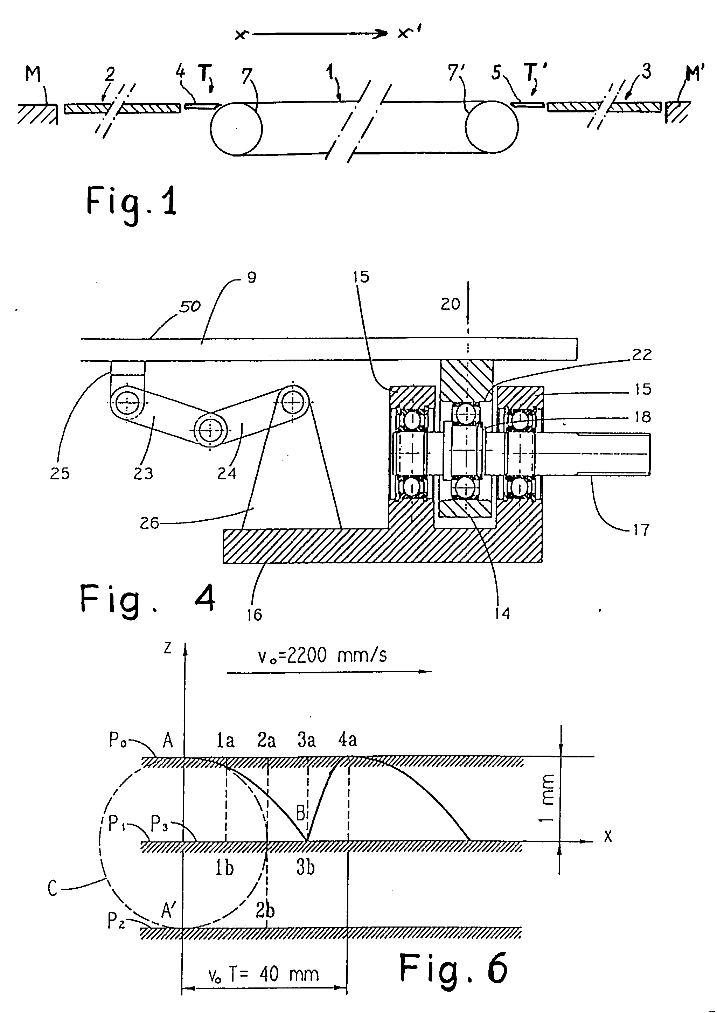

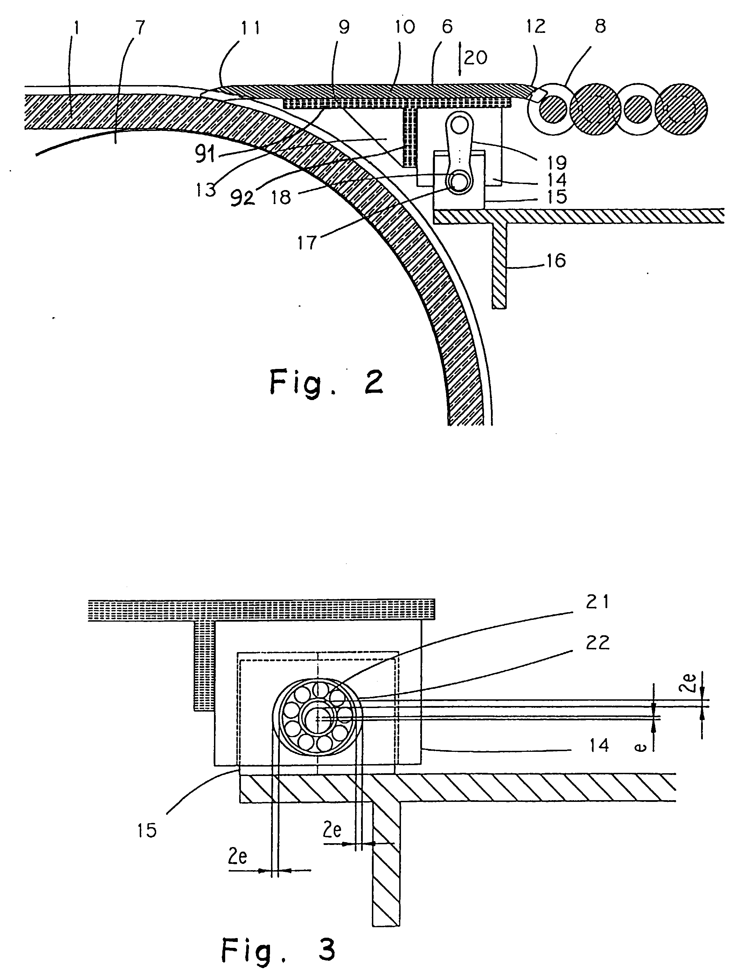

La Figure 1 représente schématiquement l'ensemble d'un système de transport à bandes entre deux planchers fixes M, M' qui peuvent être séparés d'une grande distance.

Sur la plus grande partie de cette distance, éventuellement plusieurs centaines de mètres, le déplacement des objets transportés, personnes ou marchandises, s'effectue sur un transporteur de type classique comprenant une bande continue 1 qui s'enroule sur deux tambours 7, 7' aux deux extrémités du transporteur.

La bande 1 se déplace suivant une direction xx' parallèle à son axe longitudinal et à une vitesse relativement élevée, supérieure à la vitesse normale de marche d'une personne. C'est pourquoi, un élément accélérateur 2 est placé entre le plancher fixe d'entrée M et le tambour 7 placé à l'extrémité amont de la bande dans le sens de déplacement et un élément décélérateur 3 est placé entre le tambour aval 7' et le plancher fixe de sortie M'.

De tels éléments d'accélération ou de ralentissement qui permettent de passer d'une vitesse de marche normale à la vitesse plus élevée du transporteur à bande, ou inversement, peuvent être réalisés de diverses façons connues.

De façon particulièrement avantageuse, on peut utiliser, par exemple, des séries de rouleaux parallèles disposés l'un à côté de l'autre et qui sont rainurés de façon à pouvoir s'imbriquer partiellement l'un dans l'autre pour ménager une surface d'appui pratiquement continue, la vitesse des rouleaux augmentant progressivement à partir d'un rouleau d'entrée jusqu'à un rouleau de sortie. Ainsi peut être réalisée une accélération progressive ou inversement, une décélération, sans déséquilibre de la personne transportée.

Cependant, les tambours amont 7 et aval 7' placés aux deux extrémités du transporteur 1 ont, nécessairement, un diamètre relativement élevé et il faut assurer le passage sans déséquilibre de la personne ou de l'objet transporté dans les zones de transition 4 entre l'accélérateur 2 et le transporteur 1 et 5 entre le transporteur 1 et le décélérateur 3.

Dans la disposition décrite dans le document FR-A-2.675.135, cité plus haut, on ménage une légère dénivellation entre l'extrémité aval de l'élément accélérateur et l'extrémité amont du transporteur et inversement entre l'extrémité aval du transporteur et l'extrémité amont de l'élément décélérateur. De la sorte, compte tenu de la vitesse acquise, il est possible de faire franchir les transitions à l'objet transporté moyennant une légère et très courte perte d'appui en évitant, avec un élément fixe, de déséquilibrer la personne ou l'objet transporté.

Par sécurité, les zones de transition 4 et 5 sont munies de dents formant peigne qui pénètrent dans des rainures correspondantes du tapis continu 1 mais, ces zones de transition sont simplement survolées par le piéton ou l'objet transporté qui franchit la transition en décrivant une courte trajectoire de forme parabolique.

Un tel dispositif fonctionne parfaitement mais présente l'inconvénient de ne pas être réversible puisqu'il existe une dénivellation entre l'élément amont et l'élément aval placé nécessairement plus bas.

Selon l'invention, l'élément accélérateur 2 et le décélérateur 3 sont disposés au même niveau, dans le prolongement l'un de l'autre et l'on place dans les zones de transition 4 et 5 entre le tapis transporteur 1 et, respectivement, l'accélérateur 2 et le décélérateur 3, des éléments de transfert T, T' qui comprennent chacun une plateforme de faible largeur placée sensiblement dans le prolongement des éléments adjacents et animée d'un mouvement rapide qui est soit un mouvement alternatif vertical soit un mouvement louvoyant, notamment ovale, de façon à assurer le passage d'un élément au suivant sans différence de niveau et en évitant les frottements avec les parties fixes.

Du fait qu'il n'existe plus de dénivellation entre les différents éléments, le dispositif selon l'invention présente l'avantage essentiel d'être réversible, le déplacement pouvant s'effectuer indifféremment dans un sens ou dans l'autre. En outre, comme on va le voir, le dispositif selon l'invention se prête facilement à la réalisation de courbes ou de bifurcations.

Divers modes de réalisation du dispositif de transfert sont représentés schématiquement, à titre d'exemple, sur les figures 2, 3 et 4 et sur la figure 6.

La Figure 2 représente schématiquement, en coupe longitudinale, un dispositif de transfert 6 entre un élément de transporteur à bande 1 et un élément de transporteur 3 constitué de rouleaux imbriqués 8.

L'extrémité aval du transporteur à bande est constituée par un tambour 7 sur lequel s'enroule la bande rainurée 1.

L'extrémité amont du transporteur à rouleaux est constituée par un rouleau rainuré 8.

L'élément de transfert 6 est formé d'une structure 9 en T constituée d'une partie de guidage sensiblement verticale 92 et d'une seconde partie formant une plateforme sensiblement horizontale 91. La première partie 92 est destinée à être reliée à un générateur de mouvements alternatifs 17 tel qu'un arbre entraîné en rotation et muni d'un excentrique.

La partie de ce générateur de mouvements qui est reliée directement à la structure 9 doit être prévue de façon à se loger dans l'espace entre la plateforme 91 et le guide 92, une telle structure en T ayant un encombrement assez limité pour se placer dans l'espace compris entre le tambour d'extrémité 7 et les rouleaux décélérateurs 8. Dans le cas où l'on utilise d'autres modes de réalisation, notamment des éléments accélérateurs ou décélérateurs, la forme générale du dispositif de transfert doit être adaptée à la forme des extrémités en regard des éléments adjacents pour assurer la continuité entre ceux-ci.

La plateforme 91 est recouverte d'une plaque 10 en matériau plastique à faible coefficient de frottement, par exemple en polyéthylène à haute densité. Cette plaque constitue la face d'appui 50 du dispositif de transfert. Les extrémités 11 et 12 de la plaque 10 peuvent être munies de dents formant un peigne et s'engageant dans des rainures correspondantes du tapis transporteur 1. La structure 9 en T comporte des raidisseurs 13 dès que sa longueur et sa largeur l'exigent.

A cette structure en T sont fixés au moins à chaque extrémité des plaques-supports 14 qui coulissent à frottement doux sur un guide 15 solidaire du bâti 16 du transporteur.

Le guide est équipé d'un arbre 17 entraîné en rotation par un dispositif généralement quelconque et non représenté sur la Figure. Il porte un excentrique 18 qui donne, par l'intermédiaire d'une bielle 19 articulée sur la plaque support 14, un mouvement vertical alternatif à l'élément de transfert, mouvement représenté par la double flèche 20.

Sur les Figures 3 et 4 est représenté un dispositif qui ne comporte pas de bielles. L'excentrique 18 porte un roulement 21 qui roule dans un évidement oblong 22 constitué de deux alésages d'un diamètre légèrement supérieur à celui du roulement et dont les centres, si e est l'excentricité de l'excentrique, sont écartés de 2e.

L'amplitude du mouvement alternatif est alors de + ou - 2e. L'excentricité est choisie telle que le roulement 21, lorsqu'il roule dans l'évidement 22, ne génère pas de forces horizontales d'origine centrifuge, qui risqueraient d'être transmises au bâti du transporteur.

La Figure 4 montre en particulier comment on peut éviter les frottements de la plaque-support 14 sur le guide 15 : la structure 9 de l'élément de transfert 6 est reliée au bâti 16 par un jeu de biellettes 23 et 24 articulées respectivement grâce aux supports 25 et 26 sur la structure 9 et le bâti 16. Ainsi, l'élément de transfert 6 est maintenu par les biellettes 23 et 24 suivant la direction longitudinale de transfert xx', les biellettes 23 et 24 étant articulés autour d'axes parallèles à ladite direction longitudinale de transfert xx'. Ces biellettes imposent à la structure 9 et donc à l'élément de transfert 6 un mouvement alternatif uniquement vertical tout en laissant une possibilité de débattement horizontal selon un axe perpendiculaire au mouvement des objets qui peut être nécessaire pour accompagner de légers mouvements latéraux de la bande. L'utilisation d'un jeu de biellettes à la place d'un ensemble plaque-guide permet de réduire les besoins d'entretien du transporteur, notamment de graissage, par introduction de paliers auto-lubrifiants.

On aurait pu admettre un mouvement excentré de la structure en T, mais cela aurait l'inconvénient d'induire des efforts alternatifs horizontaux importants et parasites, dus à la force centrifuge, dans le bâti du transporteur. De tels efforts devraient être compensés par des balourds, ce qui pourrait être nécessaire dans certains cas.

Toutefois, un tel mouvement peut être intéressant si on l'utilise pour entretenir la vitesse de l'objet transporté. Ceci peut être obtenu en donnant à la plateforme 9 deux mouvements alternatifs simultanés, l'un très court et vertical, l'autre plus allongé et horizontal et dans le sens de déplacement de l'objet transporté. Par ces mouvements alternatifs simultanés, la plateforme est animée d'un mouvement louvoyant et notamment ovale, la vitesse de la composante horizontale de ce mouvement pouvant atteindre la vitesse de translation de l'objet transporté à son arrivée sur la plaque de transfert. Grâce à la composante alternative verticale du mouvement, l'objet transporté n'est en contact avec la plaque que pendant les phases de vitesse positive de cette plaque. Tout frottement retardateur est alors supprimé.

La Figure 5 représente schématiquement un dispositif à mouvement louvoyant comprenant un bâti 116 sur lequel sont montés des supports tels que 36 qui reçoivent les roulements d'un arbre 117 portant deux excentriques 40 et 41 comprenant des disques de rayons différents.

L'excentrique 40, de rayon plus grand, génère un mouvement excentrique au moyen d'un embiellage articulé constitué d'une biellette 42 et d'une biellette 45 et articulé à l'excentrique 40, à un point d'attache 140.

L'excentrique 41, de rayon plus petit génère un mouvement excentrique au moyen d'une bielle 43 articulée au disque 41 à un point d'attache 141 et articulée sous la plateforme 9 grâce à une chape 47. La bielle 43 assure le positionnement vertical de la plateforme 9.

La biellette 42 est articulée à un point 145 sur la biellette 45, elle-même articulée à un point 44 sur le support 36 sur lequel elle prend appui, et porte la plateforme 9 par des chapes 37 et 46. Les chapes 37 et 46 sont articulées à un point 146. L'ensemble des biellettes 42 et 45 et des chapes 37 et 46 donne à la plateforme 9 un mouvement louvoyant.

Le mouvement louvoyant de la plateforme 9 est représenté en pointillé par des courbes 48 et 49 qui sont en fait les mouvements des articulations 146 et 147.

La Figure 6 représente la trajectoire d'un objet passant d'un transporteur à l'autre à titre de simple exemple ; pour une vitesse initiale de l'objet $V_o$= 2,2 m/s, l'amplitude verticale du mouvement de l'élément de transfert étant de + ou - 1 mm et sa fréquence 55 Hz.

Le graphique est anamorphosé: les amplitudes verticales sont multipliées par 20 par rapport aux déplacements horizontaux.

Le mouvement du plan supérieur P de l'élément de transfert est la projection sur l'axe z du mouvement d'un point qui décrit le cercle C en 1 période (1/55 s).

Un point de l'objet transporté passe en A au temps 0 avec la vitesse $V_o$ = 2200 mm/s, au moment où le plan P est au niveau $P_o$ de A. Le mouvement alternatif de ce plan entre A et A' correspond à un aller-retour en 1/55 s (période). Pendant ce temps l'objet transporté décrit d'abord la parabole de chute AB pendant les trois premiers quarts de la période (points 1, 2, 3 dont la projection horizontale est 1a, 2a, 3a, séparés de 10 mm, suivant Ax). Arrivé au point B, alors que le plan P est descendu en $P_1$, puis en $P_2$, puis remonté en $P_3$, l'objet rencontre en B ce plan P qui le remonte du point B au point 4a.

On voit que pendant la durée de la période, l'objet a parcouru 40 mm, en tombant d'abord d'environ 1 mm pendant les trois premiers quarts de la période, puis en étant ramené au niveau initial pendant le dernier quart.

Il n'est donc en contact avec l'élément de transfert que pendant un quart de période, ce qui réduit considérablement le frottement apparent.

Ainsi, sur un élément de transfert d'une vingtaine de centimètres de longueur suivant la trajectoire, il n'y aura contact et éventuellement frottement que sur 4 à 5 centimètres, d'où un freinage de l'objet transporté beaucoup moins important que sur un élément fixe.

Lorsque le mouvement de la plaque est louvoyant, sa vitesse, lorsqu'il y a contact, peut atteindre celle de l'objet transporté et il n'y aura plus aucun freinage.

Le mouvement louvoyant, également appelé mouvement ovale, est représenté par des courbes en boucles dont chaque boucle est constituée essentiellement de quatre sections : deux sections d'extrémité représentant le mouvement de retour respectivement entre l'aller et le retour ou le retour et l'aller de la platefrome 9, une section supérieure et une section inférieure représentant le mouvement d'aller et le mouvement de retour de la plateforme 9. Il est à noter que les deux sections de courbe représentant l'aller et le retour de la plateforme sont courbés dans la même direction, c'est à dire vers le haut, la section supérieure étant davantage bombée que la section inférieure. Leur forme dépend essentiellement des dimensions des excentriques 40 et 41 et des bielles et biellettes 42, 43 et 45.

Nous notons également que la position de la chape 37 est choisie de manière telle que la plateforme 9 maintient sa position horizontale pendant le mouvement. Avantageusement, la position de la chape 37 sur la biellette 42 est réalisée de manière réglable.

On notera que le mouvement de l'élément de transfert est imposé mécaniquement, et par conséquent le mouvement de l'élément transféré est indépendant de sa masse et de toute caractéristique élastique, ce qui ne serait pas le cas dans un dispositif vibratoire ordinaire.

Dans l'exemple représenté sur la figure 1, l'accélérateur 2, le transporteur principal 1 et le décélérateur 3 sont alignés suivant un même axe longitudinal parallèle à la direction de déplacement xx'. Dans ce cas, les côtés transversaux 11 et 12 de la plaque 10 ménageant la surface d'appui 50 sont parallèles entre eux et perpendiculaires à la direction de déplacement xx'. Mais l'invention s'applique également à des dispositions dans lesquelles les axes longitudinaux des deux éléments de transport adjacents forment entre eux un certain angle, tant que celui-ci reste assez faible.

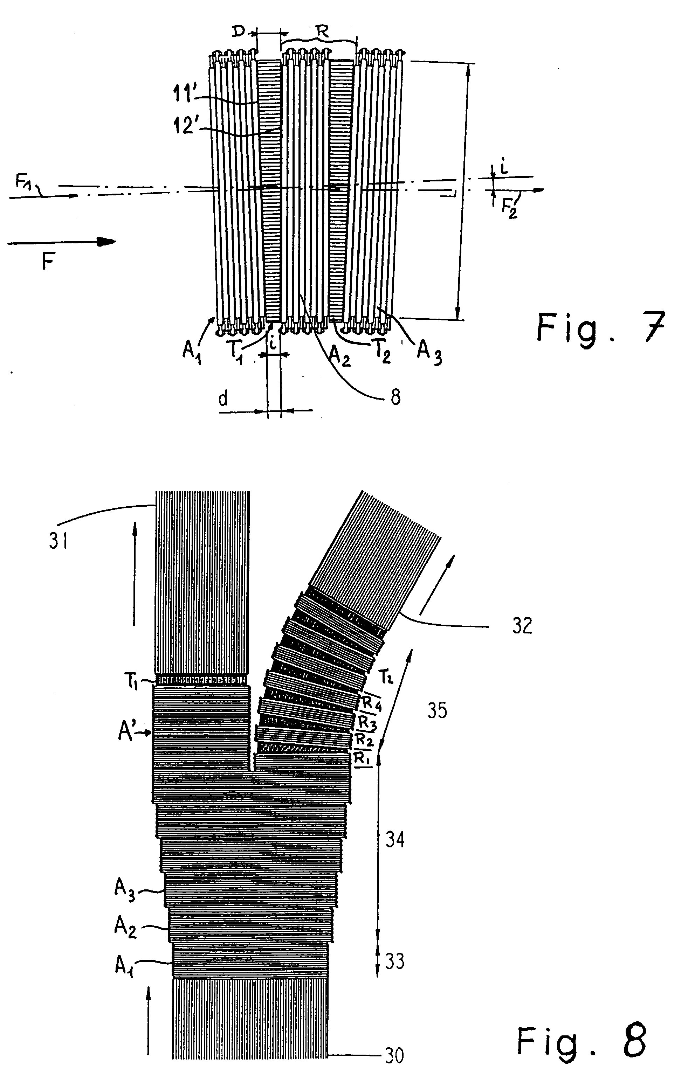

Sur la figure 7, par exemple, un élément de transfert T1 selon l'invention est interposé entre deux éléments de transport A1, A2 constitués chacun de rouleaux à axes parallèles déterminant le déplacement de l'objet transporté suviant une direction perpendiculaire aux axes des rouleaux.

Dans le mode de réalisation représenté, les éléments A1, A2 sont décalés angulairement de façon que les directions de déplacement respectives F1, F2 fassent entre-elles un angle aigu (i).

Dans ce cas, l'élément de transfert ou plaque active T1 interposé entre les deux éléments de transport A1, A2 présente une surface d'appui trapézoïdale limitée par des côtés transversaux 11', 12' faisant entre eux le même angle (i) de façon à assurer la jonction avec, respectivement, les rouleaux des deux éléments de transport A1, A2.

L'objet transporté sur l'élément de transport A1 suivant la direction F1 traverse la plaque active T1, suivant la même direction pour passer sur l'élément A2 sur lequel il est transporté sur la direction F2.

Comme précédemment, les deux bords obliques de la plaque active T1 constituent des peignes dont les dents viennent se loger dans les rainures des rouleaux adjacents.

Si la largeur de l'élément de transport A est l et sa longueur (largeur du transporteur) est L, D et d les bases de l'élément trapézoïdal T1, le rayon moyen du transporteur s'écrira :

$$Rm = \frac{l + (D+d)/2}{D-d}$$

Ainsi, si L=1000 mm, l = 200 mm, D = 100 mm, d = 80 mm, on aura :

$$Rm = \frac{200 + 90}{20} \times 1000 = 14500 \ mm = 14,5 \ m$$

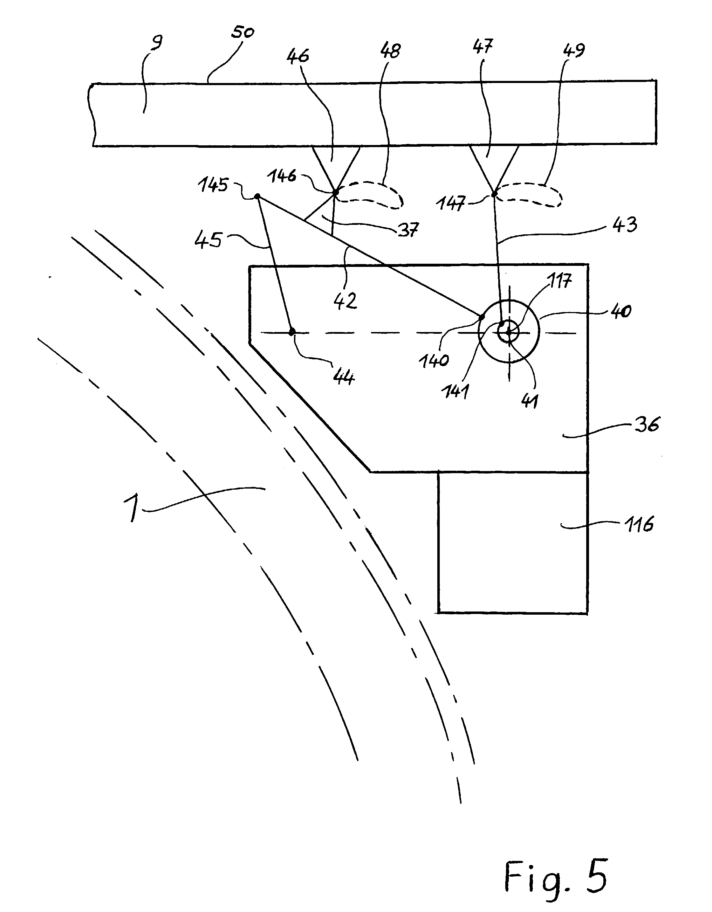

Bien entendu, l'angle (i) entre les deux directions de transport F1 et F2 et, par conséquent, les côtés transversaux 11' et 12' de l'élément trapézoïdal T1, doit rester assez faible. C'est pourquoi, pour réaliser un changement de direction relativement important, il est intéressant, comme on l'a représenté sur les figures 7 et 8 d'alterner une pluralité d'éléments de transfert trapézoïdaux T1, T2... avec des éléments transporteurs, à rouleaux A1, A2... . De la sorte, le changement de direction peut s'effectuer progressivement, chaque ensemble A+T constituant un module de rotation R.

Par ailleurs, l'invention peut avantageusement s'adapter à la réalisation d'une bifurcation, par exemple de la façon représentée schématiquement sur la figure 8.

Dans ce cas, une première bande 30 se partage entre une voie directe 31 et une voie déviée 32, grâce à un dispositif constitué d'éléments de transport à rouleaux type A et de modules de rotation R (ou A+T).

Les flèches sur la Figure 8 indiquent le sens du mouvement (qui peut d'ailleurs être inversé). L'extrémité de la bande 30 est suivie de quelques modules ayant la même largeur L que la bande sur une distance repérée par la zone 33, puis d'un certain nombre de modules de plus en plus grands A1, A2... (zone 34). Dans cette zone, des dispositifs connus, tels que chaînes pendantes ou bornes souples, séparent les objets ou les passagers. Sur la voie déviée, ces modules de transport sont suivis, dans la zone 35, de modules de rotation R1, R2... et éventuellement de nouveaux modules droits qui assurent le raccordement avec la bande 32. Dans cette zone 35, le rayon moyen peut n'être pas constant : ainsi un raccordement parabolique peut permettre d'introduire une force centrifuge progressivement croissante, puis constante, puis décroissante.

Sur la voie directe, des modules A' de largeur constante ou variable permettent le raccordement à la bande 31.

On constate que ces résultats peuvent être obtenus avec des modules de transport tous identiques et un petit nombre d'éléments de transfert de forme trapézoïdale.

Bien entendu, l'invention ne se limite pas aux caractéristiques qui viennent d'être décrites à titre de simple exemple, d'autres dispositions analogues pouvant être utilisées sans s'écarter du cadre de protection défini par les revendications.

En particulier, d'autres systèmes de mise en mouvement du dispositif de transfert pourraient être envisagés dans la mesure où il sont assez peu encombrants pour que l'ensemble se loge entre les extrémités adjacentes des éléments de transport.

D'autre part, pour réaliser un changement de direction, il n'est pas absolument nécessaire d'utiliser un dispositif de transfert de forme trapézoïdale. En effet, dans le cas des figures 7 et 8, les éléments intermédiaires de transport A1, A2 pourraient être constitués de rouleaux placés en éventail de façon qu'il existe un angle entre le premier et le dernier rouleau de chaque élément intermédiaire. Dans ce cas, chaque élément de transfert T1, T2 peut avoir une forme rectangulaire ou bien, également, une forme trapézoïdale pour réaliser un changement de direction plus rapide.

La même disposition pourrait être utilisée dans le cas de la figure 8.

De plus, une bifurcation telle que représentée sur la figure 8 ne comporte pas nécessairement des branches divergentes. En effet, le premier transporteur 30 pourrait, après une section d'élargissement 34, déboucher sur deux transporteurs parallèles 31, 32 ayant, par exemple, des vitesses différentes ou bien s'arretant à des endroits différents, l'un des transporteurs étant plus long que l'autre.

On voit donc que de multiples variantes peuvent être envisagées pour l'application des dispositions selon l'invention.

Les signes de référence insérés après les caractéristiques techniques mentionnées dans les revendications, ont pour seul but de faciliter la compréhension de ces dernières, et n'en limitent aucunement la portée.

**Revendications**

1. Dispositif de transfert entre deux éléments de transport, comprenant au moins deux éléments de transport montés sur un support fixe, respectivement un premier élément (2) et au moins un deuxième élément (1), disposés l'un à la suite de l'autre et comprenant chacun une surface d'appui sensiblement plane pour l'objet transporté et des moyens de déplacement dudit objet sur la surface d'appui suivant une direction longitudinale de transfert (xx'), caractérisé en ce que les surfaces d'appui desdits éléments de transport sont sensiblement au même niveau et que le dispositif de transfert comporte entre lesdits premier (2) et deuxième (1) éléments de transport, un élément de transfert (T, 6) présentant une surface d'appui (50) de l'objet transporté, placée sensiblement dans le prolongement commun des surfaces d'appui desdits premier (2) et deuxième (1) éléments de transport, et associé à des moyens de mise en mouvement (14-19,40-47) de ladite surface d'appui (50), susceptibles de déterminer le déplacement de l'objet transporté, pratiquement sans frottement, du premier élément (2) au deuxième élément (1), ou inversement.

2. Dispositif selon la revendication 1, caractérisé en ce que l'élément de transfert (T, 6) comprend une plateforme (9) sensiblement horizontale sur laquelle est ménagée ladite surface d'appui (50), et des moyens (92) de guidage vertical de ladite plateforme, et en ce que les moyens de mise en mouvement (14-19) comprennent un générateur de mouvements alternatifs verticaux (17) à grande fréquence et faible amplitude.

3. Dispositif selon la revendication 2, caractérisé en ce que le générateur de mouvements alternatifs (17) comprend un excentrique (18) entraîné en rotation autour d'un axe horizontal et relié par une bielle (19) à l'élément de transfert (6), ce dernier étant associé à des moyens de guidage vertical (15) prenant appui sur un support fixe (16).

4. Dispositif selon la revendication 2, caractérisé en ce que le générateur de mouvements (17) destiné à animer l'élément de transfert (6) d'un mouvement alternatif vertical comporte un roulement (21) se mouvant dans un évidement oblong (22).

5. Dispositif selon la revendication 4, caractérisé en ce que l'évidement oblong (22) est formé de deux alésages d'un diamètre légèrement supérieur à celui du roulement (21) et dont les centres sont écartés de 2e, e étant l'excentricité de l'excentrique (18).

6. Dispositif selon la revendication 4 ou 5, caractérisé en ce que l'élément de transfert (6) maintenu suivant la direction longitudinale de transfert (xx') par un jeu de biellettes (42, 45) articulées respectivement à l'élément de transfert (6) et à un support fixe (16) autour d'axes parallèles à ladite direction longitudinale (xx'), le générateur de mouvements (18) impose à l'élément de transfert (6) un mouvement alternatif uniquement vertical.

7. Dispositif selon la revendication 1, caractérisé en ce que l'élément de transfert (6) comprend une plateforme (9) sensiblement horizontale sur laquelle est ménagée ladite surface d'appui (50), et des moyens (92) de guidage vertical de ladite plateforme, et en ce que les moyens de mise en mouvement (40-47) comprennent un générateur de mouvements louvoyants, les mouvements louvoyants ayant une amplitude approximativement horizontale et une amplitude approximativement verticale très inférieure à l'amplitude horizontale.

8. Dispositif selon la revendication 7, caractérisé en ce que le générateur de mouvements louvoyants (40 à 47) comprend deux excentriques (40, 41) reliés à la plateforme (9) à deux points d'attache (46, 47) espacés l'un de l'autre respectivement par une bielle (43) et un embiellage articulé (42, 45), l'embiellage articulé (42, 45) ayant au moins un point d'articulation (145) et prenant appui sur un support fixe (36).

9. Dispositif selon la revendication 8, caractérisé en ce que les deux excentriques (40, 41) sont des disques de rayons différents qui sont montés sur un même axe (117) et qui ont chacun un point d'attache (140, 141) pour la bielle correspondante (42, 45, 43) qui relie l'excentrique à la plateforme (9), les deux points d'attache (140, 141) étant situés sur une même droite passant par l'axe (117) commun des disques.

10. Dispositif selon la revendication 8 ou 9, caractérisé en ce que l'embiellage articulé (42, 45) comprend deux biellettes (42, 45) dont la première (42) est articulée sur le disque correspondant (40) et dont la seconde (45) prend appui sur le support fixe (36) en un point d'articulation (44), la plateforme (9) étant relié à la première biellette (42) de l'embiellage articulé (42, 45) à une distance du point d'articulation (145) de l'embiellage articulé (42, 45).

11. Dispositif selon l'une quelconque des revendications 1 à 10, caractérisé en ce que l'élément de transfert (T, 6) et au moins une partie des moyens de mise en mouvement ont un encombrement limité de façon à se placer dans l'espace entre les extrémités en regard des deux éléments de transport (1, 2) compte tenu de la forme de celui-ci, la largeur de la plateforme (9) étant juste suffisante pour assurer la continuité des surfaces d'appui.

12. Dispositif selon l'une quelconque des revendications 1 à 11, caractérisé en ce que l'élément de transfert (T, 6) est recouvert d'une plaque (10) éventuellement munie de dents formant un peigne et s'engageant dans des rainures correspondantes des éléments de transport adjacents (1, 2, 3).

13. Dispositif selon la revendication 12, caractérisé en ce que la plaque (10) est réalisée au moins sur sa face supérieure, en une matière à faible coefficient de frottement, du type polyéthylène à haute densité.

14. Dispositif de transfert selon l'une des revendications précédentes, caractérisé par le fait que les directions longitudinales de déplacement, respectivement sur le premier (2) et sur le deuxième (1) éléments de transport font entre elles un angle aigu (i) et que la surface d'appui (50) de l'élément de transfert (T, 6) a une forme trapézoïdale comportant deux côtés transversaux (11') (12') faisant entre eux le même angle (i) pour le raccordement avec les extrémités correspondantes, respectivement, du premier (2) et du deuxième (1) éléments de transport.

15. Dispositif de transfert selon la revendication 14, caractérisé en ce qu'il comprend une pluralité d'éléments de transfert (T1, T2) entre lesquels sont disposés des éléments intermédiaires de transport (A1, A2) de faible largeur et que au moins certains des éléments de transfert (T1, T2) ou des éléments intermédiaires (A1, A2) présentent une surface d'appui trapézoïdale de façon à déterminer un changement progressif d'orientation de la direction générale de déplacement (F).

16. Transporteur, notamment pour piétons, marchandises en pièces ou objets analogues, comportant au moins deux éléments de transport (2, 1) placés l'un après l'autre et associés à au moins un dispositif de transfert selon l'une quelconque des revendications 1 à 13, ledit transporteur permettant le déplacement de personnes, marchandises ou autres objets aussi bien dans le sens du premier élément de transport (2) vers un deuxième élément de transport (1) que dans le sens inverse.

17. Transporteur selon la revendication 16, caractérisé en ce qu'il comprend un transporteur principal (1) du type transporteur à bande, prolongé, à chaque extrémité, par un élément de transport (T, 6) destiné à fonctionner comme élément d'accélération ou de décélération entre ledit transporteur principal (1) et un plancher fixe (M, M') de chargement ou de déchargement des objets transportés.

18. Transporteur selon la revendication 16, caractérisé par le fait qu'il comprend une bifurcation entre un premier élément de transport (30) et, respectivement un deuxième (31) et un troisième (32) éléments de transport couvrant chacune une partie de la largeur du premier élément de transport (30), et au moins un dispositif de transfert (T) selon l'une des revendications 1 à 11 ayant un premier côté transversal (11) de jonction avec l'extrémité du premier élément de transport (30) et un second côté transversal (12) de jonction avec l'extrémité du deuxième élément (31) ou du troisième élément (32).

19. Transporteur selon la revendication 18, caractérisé par le fait que la bifurcation comprend au moins un élément intermédiaire de transport (A2), constitué de rouleaux à axes parallèles rapprochés de façon à ménager une surface d'appui sensiblement continue entre, d'un côté l'extrémité du premier transporteur (30) et, de l'autre côté, deux dispositifs de transfert (T1, T2) placés côte à côte et assurant la jonction avec, respectivement, le deuxième (31) et le troisième (32) éléments de transport.

x ———→ x'

Fig. 1

Fig. 4

$v_o = 2200$ mm/s

$v_o T = 40$ mm

Fig. 6

Fig. 2

Fig. 3

Fig. 7

Fig. 8

Fig. 5